# EUROPÄISCHE PATENTSCHRIFT

(11) **EP 1 707 307 B1**
(45) Veröffentlichungstag und Bekanntmachung des Hinweises auf die Patenterteilung: **29.07.2009**
(21) Anmeldenummer: 05007129.9
(22) Anmeldetag: 31.03.2005
(51) Int. Cl.: B23Q 1/00, B25B 5/00

(54) **Schnellspannsystem**
Quick clamp system
Système de serrage rapide

(43) Veröffentlichungstag der Anmeldung: 04.10.2006
(73) Patentinhaber: Schunk GmbH & Co. KG Spann- und Greiftechnik, 74348 Lauffen (DE)
(72) Erfinder: Gross, Johann, 74081 Heilbronn (DE); Seiler, Helmut, 74226 Nordheim (DE)
(74) Vertreter: Dreiss

(56) Entgegenhaltungen:
- WO-A-03/047812
- DE-A1- 10 317 336
- DE-U1-3202004 009 28

## Beschreibung

Die Erfindung betrifft ein Schnellspannsystem mit einer Spannaufnahme, mit einem einseitig mit Federn beaufschlagten Kolben, der anderseitig mit Druck beaufschlagbar ist, mit einem am Kolben angeordneten und der Kolbenbewegung folgenden Stellglied, mit wenigstens einem, insbesondere wenigstens weitgehend senkrecht zur Kolbenachse verschiebbar geführt angeordneten Spannschieber, der über eine spannschieberseitige Schrägführung in beide Bewegungsrichtungen mit dem Stellglied bewegungsgekoppelt ist, wobei der Spannschieber bei ausgelenkten Federn eine Verriegelungslage zur Verriegelung eines in die Spannaufnahme einführbaren Spannbolzens und bei mit Druck beaufschlagtem
Kolben eine Entriegelung zur Entnahme des Spannbolzens einnimmt .

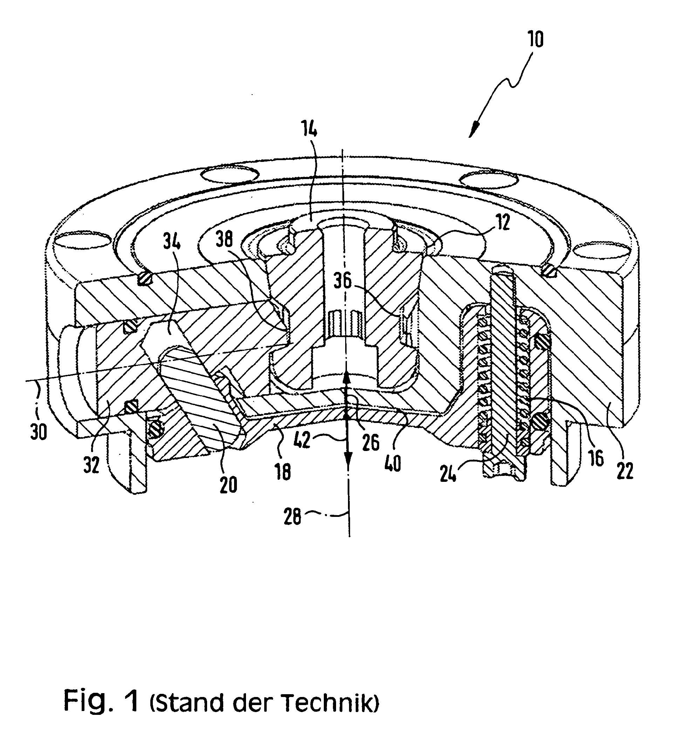

Derartige Schnellspannsysteme werden von der Patentinhaberin unter der Bezeichnung "SCHUNK UNILOCK" vertrieben. In der Figur 1 ist ein derart vorbekanntes Schnellspannsystem mit dem Bezugszeichen 10 gekennzeichnet. Das Schnellspannsystem sieht eine Spannaufnahme 12 vor, in der ein Spannbolzen 14 vorhanden ist. Ferner ist ein einseitig mit Federn 16 beaufschlagbarer Kolben 18 vorgesehen, wobei am Kolben fest angeordnet Stellglieder 20 in Form von schräg angeordneten Führungszapfen vorgesehen sind. Der Kolben 18 wird aufgrund der Federelemente 16 in seiner in der Figur 1 dargestellten oberen Endlage gehalten und in Richtung des Pfeils 26 beaufschlagt. Die Federn 16 stützen sich dabei an einer in das Grundgehäuse 22 eingeschraubten Zugschraube 24 ab. Im Gehäuse 22 sind senkrecht zur Kolbenachse 28 entlang der Achse 30 geführte, in Richtung ihrer jeweiligen Achse 30 länglich ausgebildete Spannschieber 32 vorgesehen. Die Spannschieber 32 weisen ihrerseits eine Schrägführung 34 auf, in die das jeweilige Stellglied 20 formschlüssig eintaucht.

Bei dem in der Figur 1 dargestellten Teilschnitt ist lediglich ein Spannschieber 32 sowie ein Federelement 16 dargestellt. Insgesamt sind im zylinderförmig ausgebildeten Gehäuse 22 zwei diametral zueinander angeordnete Spannschieber 32 sowie insbesondere acht symmetrisch verteilt angeordnete Federn 16 vorgesehen.

In der Figur 1 ist die Verriegelungslage des Schnellspannsystems 10 dargestellt, bei der die Federn 16 ausgelenkt sind, sich der Kolben 18 in seiner oberen Endlage befindet, wodurch über die Stellglieder 20 und die Schrägführungen 34 die Spannschieber 32 in ihrer radial innen liegenden Verriegelungslage sind. In dieser Verriegelungslage wird der Spannbolzen 14, der eine umlaufende Nut 36 aufweist, über an den Spannschiebern 32 radial innen liegende Verriegelungsnasen 38 in der Spannaufnahme 12 gehalten.

Zur Entnahme des Spannbolzens 14 aus der Spannaufnahme 12 wird der zwischen dem Grundgehäuse 22 und dem Kolben 18 liegende Druckraum 40 gegen die Federkraft der Federn 16 in Richtung des Pfeils 42 nach unten druckbeaufschlagt. Aufgrund der fest am Kolben 18 angeordneten und in die Schrägführungen 34 eingreifenden Stellglieder 20 werden die Spannschieber 32 nach radial außen in ihre Entriegelungslage bewegt. Dadurch wird der Spannbolzen 14 freigegeben und kann aus der Spannaufnahme entnommen werden.

Das Vorsehen von in radialer Richtung geführten Spannschiebern hat den Vorteil, dass der Spannbolzen auch unter hohen Belastungen, insbesondere unter hohen Kippmomenten in der Spannaufnahme gehalten werden kann. Ein Lösen des Spannbolzens aus der Spannaufnahme kann nur dann erfolgen, wenn auf die Spannschieber in radiale Richtung Kräfte wirken. Die Kraft, mit welcher die Spannschieber in radialer Richtung in ihrer Verriegelungslage gehalten werden, hängt beim bekannten Stand der Technik von der Federkraft der vorzusehenden Federn ab. Je nach Federcharakteristik der zu verwendenden Federn kann diese Kraft unterschiedlich sein. Soll eine hohe Kraft bereitgestellt werden, so sind entsprechend harte Federn einzusetzen. Dies hat den Nachteil, dass zum Öffnen des Schnellspannsystems entsprechend hohe Drücke im Druckraum 40 vorgesehen werden müssen.

Als weiterer Stand der Technik sind Schnellspannsysteme bekannt, bei denen keine Spannschieber, sondern Spannkugeln Verwendung finden. Beispielsweise zeigt die DE 103 17 336 A1 ein derartiges Schnellspannsystem. Bei der Verwendung von Kugeln hat sich allerdings als problematisch herausgestellt, dass keine sehr hohen Kippmomente des Spannbolzens in der Spannaufnahme übertragen werden können. Aufgrund der sphärischen Oberfläche der Kugeln neigen diese dazu, ein ungewolltes Auslenken des Spannbolzens aus der Spannaufnahme nicht verhindern zu können. Mit Spannschiebern gemäß dem vorbekannten Stand der Technik der Anmelderin können höhere Kippmomente übertragen werden.

Ferner sind aus dem Stand der Technik Schnellspannsysteme bekannt, bei denen Klemmelemente zum Verriegeln des Spannbolzens in der Spannaufnahme in axialer und radialer Richtung verfahren werden. Ein Beispiel hierfür gibt die DE 20 2004 009 283 U1.

Der vorliegenden Erfindung liegt die Aufgabe zugrunde, ein eingangs beschriebenes Schnellspannsystem, mit dem aufgrund der vorzusehenden in axialer Richtung verschiebbar geführten Spannschiebern hohe Kippmomente übertragen werden können, vorteilhaft weiterzubilden. Insbesondere sollen dabei über die Spannschieber in radialer Richtung wirkende Verriegelungskräfte optimiert werden.

Diese Aufgabe wird durch das eingangs genannte Schnellspannsystem dadurch gelöst, dass die Schrägführung eine ungleichförmige Führungskontur mit bezüglich der Kolbenachse unterschiedlichen Neigungswinkeln zur Erreichung unterschiedlicher Übersetzungsverhältnisse aufweist. Das erfindungsgemäße Schnellspannsystem unterscheidet sich folglich vom vorbekannten Stand der Technik gemäß Figur 1 dadurch, dass über das Stellglied und die Schrägführung kein lineares Übersetzungsverhältnis bereitgestellt wird, sondern dass aufgrund der ungleichförmigen Führungskontur ein optimiertes Übersetzungsverhältnis zur Maximierung der Spannkraft in der Verriegelungslage bereitgestellt werden kann.

Dabei ist zu berücksichtigen, dass die zu verwendenden, den Kolben einseitig beaufschlagenden Federn regelmäßig in ihrer Verriegelungslage aufgrund ihrer Streckung eine geringere Kraft bereitstellen, als in der Entriegelungslage, in der die Federn mehr vorgespannt sind. Diese wegabhängige Federkraft der verwendeten Federn ergibt sich insbesondere aus der vergleichsweise kurzen Länge der Federn. Mit einem erfindungsgemäßen Schnellspannsystem kann beispielsweise die wegabhängige Federkraft der zu verwendenden Federn ausgeglichen werden, so dass die Spannkraft insbesondere in der Verriegelungslage optimiert werden kann. Je nach vorzusehendem Neigungswinkel der Führungskontur kann ein unterschiedliches Übersetzungsverhältnis der Bewegung des Stellglieds zur Bewegung des Spannschiebers bereitgestellt werden. Dennoch sind aufgrund des Vorsehens der Spannschieber hohe Kippmomente übertragbar.

Bei einer vorteilhaften Ausführungsform der Erfindung weist die Führungskontur zwei einander gegenüberliegende Kulissenabschnitte auf, wobei das Stellglied beim Verfahren des Spannschiebers in die eine Richtung an einem Kulissenabschnitt abfährt und beim Verfahren des Spannschiebers in die andere Richtung an dem anderen Kulissenabschnitt abfährt. Dies hat den Vorteil, dass eine Zwangsführung des Spannschiebers beim Bewegung sowohl in die Verriegelungslage als auch in die Entriegelungslage gewährleistet wird.

Dabei kann insbesondere vorgesehen sein, dass die beiden Kulissenabschnitte unterschiedlich und nicht parallel zueinander ausgebildet sind. Dies hat zur Folge, dass beim Verfahren des Spannschiebers in die Verriegelungslage andere Übersetzungsverhältnisse vorhanden sein können als in die Entriegelungslage. Insbesondere beim Entriegeln des Spannschiebers tritt immer wieder der Fall auf, dass die höheren Haftreibungskräfte des verriegelten und sich in Ruhe befindlichen Systems überwunden werden müssen. Deshalb sind insbesondere beim Entriegeln zunächst höhere Kräfte erforderlich, die über einen entsprechend flachen Neigungswinkel bereitgestellt werden können.

Vorteilhafterweise kann die Führungskontur beziehungsweise können die Kulissenabschnitte Unterabschnitte in Form von Eilhubabschnitten mit größeren Neigungswinkeln und/oder Krafthubabschnitte mit kleineren Neigungswinkeln umfassen. Je nachdem, in welcher Hublage des Keilschiebers entsprechende Eigenschaften bereitgestellt werden sollen, können die Neigungswinkel entsprechend gewählt werden. Die einzelnen Unterabschnitte der Kulissenabschnitte können dabei vorteilhafterweise tangential ineinander übergehen.

Dabei ist vorteilhaft, wenn die Eilhubabschnitte einen Neigungswinkel im Bereich von 30° bis 60° und insbesondere im Bereich von 40° bis 50° aufweisen und/oder wenn die Krafthubabschnitte einen Neigungswinkel im Bereich von größer 0° bis 30° und insbesondere im Bereich von 15° bis 25° aufweisen. Bei Eilhubabschnitten von 40° bis 50° hat sich gezeigt, dass noch genügend Kraft zum Bewegen der Stellschieber bereitgestellt werden kann, bei entsprechend erhöhter Geschwindigkeit der Stellschieber. Bei Neigungswinkeln in Bereich von 15 bis 25° hat sich herausgestellt, dass insbesondere bei nachlassender Federkraft eine entsprechend ausreichende Krafterhöhung bereitgestellt werden kann.

Wie bereits erwähnt, ist besonders vorteilhaft, wenn die Führungskontur auf die Charakteristik der Federn derart abgestimmt ist, dass bei nachlassender Federkraft kleinere Neigungswinkel vorgesehen sind.

Besonders vorteilhaft ist, wenn die Führungskontur derart ausgebildet ist, dass bei Erreichen, kurz vor Erreichen und/oder kurz nach Erreichen der Verriegelungsendlage des Stellglieds ein Krafthubabschnitt vorgesehen ist. Wie bereits erwähnt, sind in der Endlage die Federn gedehnt und weisen eine geringere Federkraft auf.

Ebenso ist vorteilhaft, wenn bei Erreichen, kurz vor Erreichen und/oder kurz nach Erreichen der Entriegelungsendlage des Stellglieds ein Eilhubabschnitt vorgesehen ist. Zum einen sind hierbei die Federn komprimiert und stellen deshalb eine vergleichsweise hohe Kraft bereit. Zum anderen sind hier keine externen Kräfte vorhanden, gegen die die Stellschieber wirken müssten.

Gemäß der Erfindung kann die Schrägführung als quer zur Bewegungsachse des Spannschiebers verlaufende Schrägführungsnut ausgebildet sein, wobei die Führungskontur beziehungsweise die Kulissenabschnitte von den einander gegenüberliegenden Nutwänden gebildet sind. Diesbezüglich kann dann das Stellglied als quer zur Bewegungsachse des Spannschiebers verlaufender, am Kolben angeordneter Zylinderstift ausgebildet sein. Der Zylinderstift ist dabei vorteilhafterweise gleich breit oder breiter als die Führungsnut ausgebildet, so dass die Kräfte großflächig übertragen werden können.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben ist. Dabei zeigen:
- Figur 1: den bereits beschriebenen Stand der Technik,
- Figur 2: einen Längsschnitt durch eine erfindungsgemäße Sperreinrichtung in Verriegelungslage,
- Figur 3: den Schnitt gemäß Figur 2 in Entriegelungslage,
- Figur 4a: einen Spannschieber in Verriegelungslage,
- Figur 4b: eine Zwischenlage des Spannschiebers gemäß Figur 4a,
- Figur 4c: die Entriegelungslage des Spannschiebers, und
- Figur 4d: eine Zwischenlage des Spannschiebers.

Das in den Figuren dargestellte erfindungsgemäße Schnellspannsystem 50 weist einen im Wesentlichen dem Schnellspannsystem 10 gemäß Figur 1 entsprechenden Aufbau auf. Entsprechende Bauteile sind deshalb mit entsprechenden Bezugszeichen versehen.

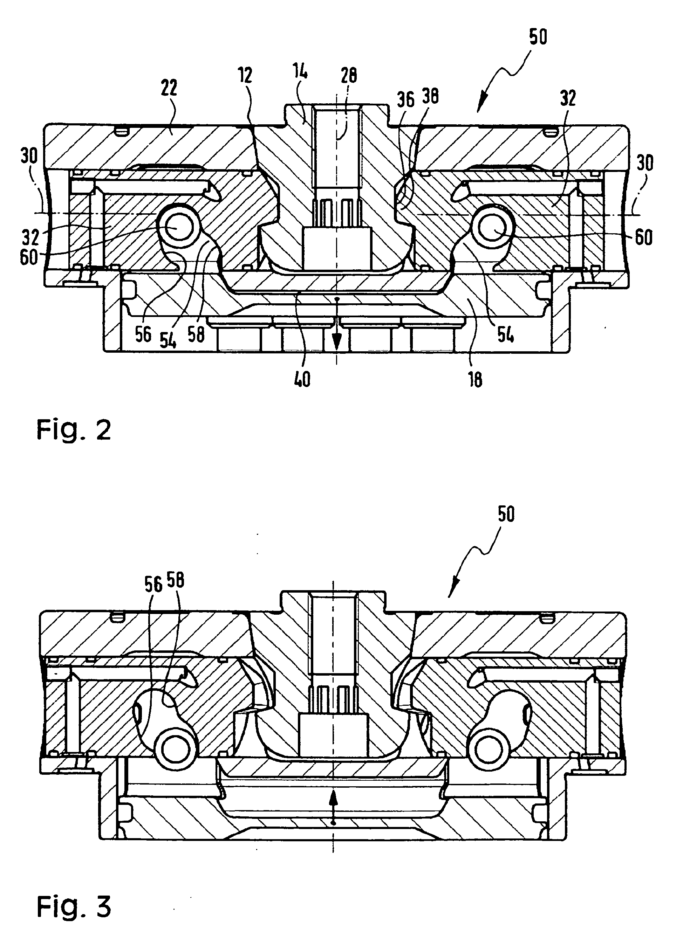

Wesentliche Unterschiede zwischen dem erfindungsgemäßen Schnellspannsystem 50 und dem vorbekannten Schnellspannsystem 10 bestehen in der Ausbildung der Schrägführung und der Stellglieder. Beim erfindungsgemäßen Schnellspannsystem 50 weisen die an den Spannschiebern 32 vorgesehenen Schrägführungen 52 eine ungleichförmige Führungskontur 54 mit bezüglich der Kolbenachse 28 unterschiedlichen Neigungswinkeln zur Erreichung unterschiedlicher Übersetzungsverhältnisse auf. Die jeweilige Führungskontur 54 sieht zwei einander gegenüberliegende, nicht parallel verlaufende Kulissenabschnitte 56 und 58 vor, wobei die als fest an den Kolben 18 angeordnete Zylinderstifte 60 ausgebildeten Stellglieder zur Erreichung der Verriegelungslage sich an den Kulissenabschnitten 54 zur Erreichung der Entriegelungsanlage an den Kulissenabschnitten 56 entlang bewegen. Die Führungsnuten sind dabei, wie aus der Figur 2 und 3 deutlich wird, als quer zur Bewegungsachse 30 des Spannschiebers verlaufende Schrägführungsnuten ausgebildet, wobei die Kulissenabschnitte 56 und 58 von den einander gegenüberliegenden Nutwänden gebildet sind.

In den Figuren 2 und 3 sind die in der Figur 1 dargestellten Federelemente, die die Spannschieber 32 in ihrer Verriegelungslage halten, nicht dargestellt.

In der Figur 2 ist die Verriegelungslage dargestellt, in der die Spannschieber 32 aufgrund der nicht dargestellten Federelemente in ihrer Verriegelungslage gehalten werden.

In der Figur 3 ist die Entriegelungslage dargestellt, bei der der Druckraum 40 derart mit Fluid beaufschlagt wird, dass die nicht dargestellten Federelemente zusammengedrückt werden, sich der Kolben in seine untere Entriegelungslage bewegt und die Stellglieder in Form der Zylinderstifte 60 nach unten verfahren werden. Aufgrund der Zwangsbewegungskopplung der in die Schrägführungen 52 eingreifenden Zylinderstifte 60 erfolgt ein nach radial außen gerichtetes Bewegen der Spannschieber 32, wodurch der Spannbolzen 14 freigegeben wird.

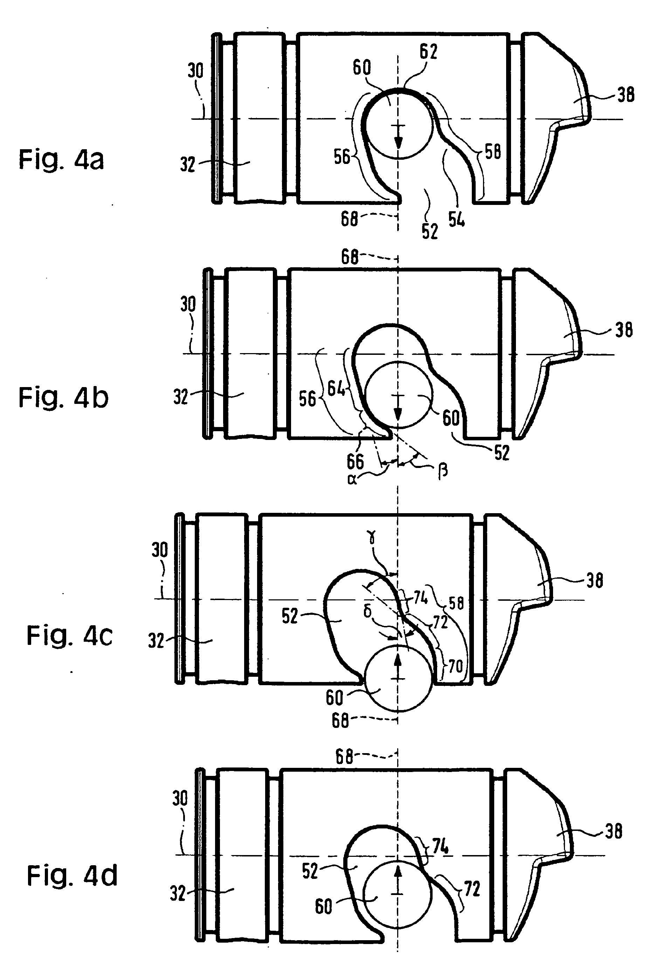

In der Figur 4 sind verschiedene Zwischenlagen des in den Figuren 2 und 3 auf der linken Seite dargestellten Spannschiebers 32 dargestellt.

Figur 4a zeigt dabei die Verriegelungslage, wie sie in der Figur 2 dargestellt ist. Der Zylinderstift 60 befindet sich dabei in seiner oberen Hubendlage und liegt am oberen, kreisabschnittförmigen Ende 62 der Führungskontur 54 der Schrägführung 52 an. Wie aus der Figur a bis Figur d deutlich wird, sind die beiden einander gegenüberliegenden Kulissenabschnitte 56 und 58 unterschiedlich und nicht parallel zueinander ausgebildet.

Beim Verfahren des Kolbens 18 in Richtung der Entriegelungslage wird der Zylinderstift 60 nach axial unten bewegt und läuft am Kulissenabschnitt 56 ab. Der Kulissenabschnitt 56 weist dabei zwei Unterabschnitte 64 und 66 auf, wobei der Unterabschnitt 64 als Krafthubabschnitt und der Unterabschnitt 66 als Eilhubabschnitt ausgebildet ist. Der Krafthubabschnitt 64 weist einen bezüglich der Kolbenachse 28 beziehungsweise der Bewegungsachse des Zylinderstifts 60, die in der Figur 4a bis 4d mit dem Bezugszeichen 68 gekennzeichnet ist, vergleichsweise kleinen Neigungswinkel α von ca. 20° auf.

In dem Bereich, in dem der Zylinderstift 60 in der Figur 4b dargestellt ist, ist ein tangentialer Übergangsbereich zwischen dem Krafthubabschnitt 64 und dem Eilhubabschnitt 66 vorgesehen. Der Eilhubabschnitt 66 weist bezüglich der Achse 68 einen Neigungswinkel β von ca. 50° auf. Aufgrund des Krafthubabschnitts 64 werden beim Rückfahren des Spannschiebers 32 aus seiner Verriegelungslage zunächst hohe Kräfte bereitgestellt. Dies ist insbesondere dann erforderlich, wenn der Spannbolzen unter Einfluss äußerer Zugkräfte steht und deshalb höhere Kräfte zum Rückführen des Spannschiebers benötigt werden. Sobald der Spannschieber sich vom Spannbolzen gelöst hat, kann der Spannschieber mit geringer Kraft vergleichsweise zügig zurückbewegt werden, was aufgrund des großen Neigungswinkels β des Eilhubabschnitts 66 gewährleistet wird.

In der Figur 4c ist der Zylinderstift 60 in seiner unteren Endlage dargestellt; der Spannschieber 32 befindet sich in seiner Entriegelungslage.

Soll nun ein Verriegeln erfolgen, wird der Druckraum 40 drucklos geschaltet, wodurch sich der Kolben 18 aufgrund der Federbeaufschlagung nach oben bewegt. Der Zylinderstift 60 fährt dabei dann den Kulissenabschnitt 58 ab. Der Kulissenabschnitt 58 sieht im Wesentlichen drei Teilabschnitte vor, nämlich einen kurzen Kraftabschnitt 70, einen längeren Eilhubabschnitt 72 und einen daran anschließenden kurzen Kraftabschnitt 74.

Beim Bewegen des Zylinderabschnitts 60 nach oben wird aufgrund des ersten kurzen Krafthubabschnitts 70 mit erhöhter Kraft in Richtung der Verriegelungslage bewegt. Daran schließt sich der Eilhubabschnitt 72 tangential an, der bezüglich der Achse 68 einen Neigungswinkel γ von ca. 45° aufweist. Kurz vor Erreichen der Verriegelungsendlage ist der Krafthubabschnitt 74 vorgesehen, der sich tangential an den Eilhubabschnitt 72 anschließt. Aufgrund des Krafthubabschnitts 74 erfolgt ein Verriegeln des Spannbolzens 14 mit erhöhter Verriegelungskraft. Dies kann insbesondere deshalb sinnvoll sein, wenn die Federn 16 aufgrund ihrer Dehnung an Federkraft verlieren sollten. Die geringer werdende Federkraft wird folglich durch den Krafthubabschnitt 74 kompensiert oder darüber hinaus noch verstärkt. Der Krafthubabschnitt 74 weist gegenüber der Achse 28 beziehungsweise 68 einen Neigungswinkel von ca. 10° auf.

In der Figur 4d befindet sich der Zylinderstift im tangentialen Übergangsbereich zwischen dem Eilhubabschnitt 72 und dem Krafthubabschnitt 74.

Wie insbesondere aus der Figur 4a bis 4d deutlich wird, ist die Führungskontur 54 aufgrund der verschiedenen Kulissenabschnitte 56 und 58 ungleichförmig ausgebildet, wodurch sich besonders vorteilhafte Übersetzungsverhältnisse der axialen Bewegung des Zylinderstifts 60 zur radialen Bewegung des jeweiligen Spannschiebers 32 ergeben.

## Patentansprüche

1. Schnellspannsystem (50) mit einer Spannaufnahme (12), mit einem einseitig mit Federn (16) beaufschlagten Kolben (18), der anderseitig mit Druck beaufschlagbar ist, mit einem am Kolben (18) angeordneten und der Kolbenbewegung folgenden Stellglied (60), mit wenigstens einem verschiebbar geführt angeordneten Spannschieber (32), der über eine spannschieberseitige Schrägführung (52) in beide Bewegungsrichtungen mit dem Stellglied (60) bewegungsgekoppelt ist, wobei der Spannschieber (32) bei gestreckten Federn (16) eine Verrieglungslage zur Verrieglung eines in die Spannaufnahme (12) einführbaren Spannbolzens (14) und bei mit entsprechendem Druck beaufschlagtem Kolben (18) eine Entrieglungslage zur Entnahme des Spannbolzens (14) einnimmt, **dadurch gekennzeichnet, dass** die Schrägführung (52) eine ungleichförmige Führungskontur (54) mit bezüglich der Kolbenachse (28) unterschiedlichen Neigungswinkeln (α, β, γ, δ) zur Erreichung unterschiedlicher Übersetzungsverhältnisse aufweist.

2. Schnellspannsystem (50) nach Anspruch 1, **dadurch gekennzeichnet, dass** die Führungskontur (54) zwei einander gegenüber liegende Kulissenabschnitte (56, 58) aufweist, wobei das Stellglied (60) beim Verfahren des Spannschiebers (32) in die eine Richtung am einen Kulissenabschnitt (56) abfährt und beim Verfahren des Spannschiebers (32) in die andere Richtung am anderen Kulissenabschnitt (58) abfährt.

3. Schnellspannsystem (50) nach Anspruch 1 oder 2, **dadurch gekennzeichnet, dass** die beiden Kulissenabschnitte (56, 58) unterschiedlich und nicht parallel zueinander ausgebildet sind.

4. Schnellspannsystem nach Anspruch 1, 2 oder 3, **dadurch gekennzeichnet, dass** die Führungskontur (54) und/oder die Kulissenabschnitte (56, 58) Unterabschnitte in Form von Eilhubabschnitten (66, 72) mit größeren Neigungswinkeln und/oder Krafthubabschnitten (64, 70, 74) kleineren Neigungswinkeln (α, δ) umfassen.

5. Schnellspannsystem (50) nach Anspruch 4, **dadurch gekennzeichnet, dass** die Eilhubabschnitte (66, 72) Neigungswinkel (β, γ) im Bereich von 30° bis 60°, und insbesondere im Bereich von 40° bis 50° aufweisen und/oder dass die Krafthubabschnitte (64, 70, 74) Neigungswinkeln (α, δ) im Bereich von größer 0° bis 30°, und insbesondere im Bereich von 15° bis 25° aufweisen.

6. Schnellspannsystem (50) nach einem der vorherigen Ansprüche, **dadurch gekennzeichnet, dass** die Führungskontur (54) auf die Charakteristik der Federn (16) derart abgestimmt ist, dass bei nachlassender Federkraft kleinere Neigungswinkel vorgesehen sind.

7. Schnellspannsystem (50) nach einem der Ansprüche 4, 5 oder 6, **dadurch gekennzeichnet, dass** die Führungskontur (54) derart ausgebildet ist, dass bei Erreichen, kurz vor Erreichen und/oder kurz nach Erreichen der Verrieglungsendlage des Stellglieds (60) ein Krafthubabschnitt (64, 74) vorgesehen ist.

8. Schnellspannsystem (50) nach einem der Ansprüche 4 bis 7, **dadurch gekennzeichnet, dass** bei Erreichen, kurz vor Erreichen und/oder kurz nach Erreichen der Entrieglungsendlage des Stellglieds (60) ein Eilhubabschnitt (66, 72) vorgesehen ist.

9. Schnellspannsystem nach einem der vorherigen Ansprüche, **dadurch gekennzeichnet, dass** die Schrägführung (52) als quer zur Bewegungsachse des Spannschiebers verlaufende Schrägführungsnut ausgebildet ist, wobei die Führungskontur (54) von den einander gegenüberliegenden Nutwänden gebildet sind.

10. Schnellspannsystem (50) nach einem der vorherigen Ansprüche, **dadurch gekennzeichnet, dass** das Stellglied (60) als quer zur Bewegungsachse des Spannschiebers (32) verlaufender, am Kolben (18) angeordneter Zylinderstift ausgebildet ist.

## Claims

1. Quick clamp system (50) comprising a clamping receptacle (12) having a piston (18) which is impinged upon on one side with springs (16) and can have pressure applied to the other side, comprising an actuator (60) arranged at the piston (18) and following the piston movement, and at least one clamping slide (32), which is arranged displaceably guided and coupled for movement to the actuator (60), via an inclined guideway (52) on the clamping slide side, in both movement directions, wherein, with the springs (16) extended, the clamping slide (32) assumes a locking position for locking a clamping pin (14) which can be introduced into the clamping receptacle (12) and, with appropriate pressure applied to the piston (18), the clamping slide (32) assumes an unlocking position for removal of the clamping bolt (14), **characterised in that** the inclined guideway (52) has an uneven guide contour (54) with different inclination angles (α, β, γ, δ) relative to the piston axis (28) for achieving different gearing ratios.

2. Quick clamping system (50) according to claim 1, **characterised in that** the guide contour (54) comprises two mutually opposed sliding guide sections (56, 58), wherein, when the clamping slide (32) travels in one direction, the actuator (60) moves along one sliding guide section (56) and, when the clamping slide (32) travels in the other direction, the actuator (60) moves along the other sliding guide section (58).

3. Quick clamping system (50) according to claim 1 or 2, **characterised in that** the two sliding guide sections (56, 58) are configured differently and not parallel to one another.

4. Quick clamping system (50) according to claim 1, 2, or 3, **characterised in that** the guide contour (54) and/or the sliding guide sections (56, 58) comprise sub-sections in the form of rapid lift sections (66, 72) with larger inclination angles and or power lift sections (64, 70, 74) with smaller inclination angles (α, δ).

5. Quick clamping system (50) according to claim 4, **characterised in that** the rapid lift sections (66, 72) have inclination angles (β, γ) in the range of 30° to 60°, and in particular in the range of 40° to 50°, and/or that the power lift sections (64, 70, 74) have inclination angles (α, δ) in the range of greater than 0° to 30°, and in particular in the range of 15° to 25°.

6. Quick clamping system (50) according to one of the preceding claims, **characterised in that** the guide contour (54) is matched to the characteristic of the springs (16) such that as the spring force reduces, smaller inclination angles are provided.

7. Quick clamping system (50) according to one of the claims 4, 5 or 6, **characterised in that** the guide contour (54) is configured such that on reaching, shortly before reaching and/or shortly after reaching the locking end position of the actuator (60), a force lift section (64, 74) is provided.

8. Quick clamping system (50) according to one of the claims 4 to 7, **characterised in that** on reaching, shortly before reaching and/or shortly after reaching the unlocking end position of the actuator (60), a rapid lift section (66, 72) is provided.

9. Quick clamping system (50) according to one of the preceding claims, **characterised in that** the inclined guideway (52) is configured as an inclined guide slot extending transversely to the movement axis of the clamping slide, wherein the guide contour (54) is formed by mutually opposed slot walls.

10. Quick clamping system (50) according to one of the preceding claims, **characterised in that** the actuator (60) is configured as a cylindrical pin arranged at the piston (18) and extending transversely to the movement axis of the clamping slide (32).

## Revendications

1. Système à serrage rapide (50) avec un logement de serrage (12), avec un piston (18) actionné d'un côté par des ressorts (16), lequel piston peut être actionné de l'autre côté par pression, avec un organe de réglage (60) agencé sur le piston (18) et suivant le déplacement du piston, avec au moins un coulisseau de serrage (32) agencé de manière à être guidé en translation, lequel coulisseau de serrage est couplé en mouvement à l'organe de réglage (60) dans les deux sens de déplacement par le biais d'un guidage oblique (52) côté coulisseau de serrage, le coulisseau de serrage (32) prenant, lorsque les ressorts (16) sont tendus, une position de verrouillage destinée au verrouillage d'un boulon de serrage (14) pouvant être introduit dans le logement de serrage (12) et, lorsque le piston (18) est actionné par une pression correspondante, une position de déverrouillage destinée à l'enlèvement du boulon de serrage (14), **caractérisé en ce que** le guidage oblique (52) présente un contour de guidage (54) irrégulier avec des angles d'inclinaison (α, β, γ, δ) différents par rapport à l'axe de piston (28) afin d'obtenir des rapports de multiplication différents.

2. Système à serrage rapide (50) selon la revendication 1, **caractérisé en ce que** le contour de guidage (54) présente deux segments de coulisse (56, 58) situés l'un en face de l'autre, l'organe de réglage (60) partant sur le segment de coulisse (56) lorsque le coulisseau de serrage (32) se déplace dans une direction et sur l'autre segment de coulisse (58) lorsque le coulisseau de serrage (32) se déplace dans l'autre direction.

3. Système à serrage rapide (50) selon la revendication 1 ou 2, **caractérisé en ce que** les deux segments de coulisse (56, 58) sont réalisés non parallèles et différents l'un de l'autre.

4. Système à serrage rapide selon la revendication 1, 2 ou 3, **caractérisé en ce que** le contour de guidage (54) et/ou les segments de coulisse (56, 58) comporte(nt) des sous-segments sous la forme de segments à course rapide (66, 72) avec des angles d'inclinaison supérieurs et/ou des segments à course d'effort (64, 70, 74) avec des angles d'inclinaison (α, δ) inférieurs.

5. Système à serrage rapide (50) selon la revendication 4, **caractérisé en ce que** les segments à course rapide (66, 72) possèdent des angles d'inclinaison (β, γ) compris entre 30° et 60°, et en particulier compris entre 40° et 50°, et/ou **en ce que** les segments à course d'effort (64, 70, 74) possèdent des angles d'inclinaison (α, δ) supérieurs à 0° pouvant aller jusqu'à 30°, et en particulier compris entre 15° et 25°.

6. Système à serrage rapide (50) selon l'une des revendications précédentes, **caractérisé en ce que** le contour de guidage (54) est harmonisé sur la caractéristique des ressorts (16) de telle façon qu'il est prévu des angles d'inclinaison inférieurs lorsque la force de ressort se détend.

7. Système à serrage rapide (50) selon l'une des revendications 4, 5 ou 6, **caractérisé en ce que** le contour de guidage (54) est réalisé de telle façon que, lorsque l'on atteint la position finale de verrouillage de l'organe de réglage (60), juste avant de l'atteindre et/ou juste après l'avoir atteinte, il est prévu un segment à course d'effort (64, 74).

8. Système à serrage rapide (50) selon l'une des revendications 4 à 7, **caractérisé en ce que**, lorsque l'on atteint la position finale de déverrouillage de l'organe de réglage (60), juste avant de l'atteindre et/ou juste après l'avoir atteinte, il est prévu un segment à course rapide (66, 72).

9. Système à serrage rapide selon l'une des revendications précédentes, **caractérisé en ce que** le guidage oblique (52) est réalisé sous la forme d'une rainure de guidage oblique s'étendant transversalement à l'axe de déplacement du coulisseau de serrage, le contour de guidage (54) étant formé par les parois de rainure se faisant face.

10. Système à serrage rapide (50) selon l'une des revendications précédentes, **caractérisé en ce que** l'organe de réglage (60) est réalisé sous la forme d'une goupille cylindrique agencée sur le piston (18) et s'étendant transversalement à l'axe de déplacement du coulisseau de serrage (32).
